(19) Europäisches Patentamt
European Patent Office
Office européen des brevets

(11) **EP 4 545 942 A1**

(12) **EUROPEAN PATENT APPLICATION**

(43) Date of publication:
**30.04.2025 Bulletin 2025/18**

(21) Application number: **24208362.4**

(22) Date of filing: **23.10.2024**

(51) International Patent Classification (IPC):
**G01N 17/00** (2006.01)

(52) Cooperative Patent Classification (CPC):
**G01N 17/006;** G01N 23/046; G01N 2223/1016;
G01N 2223/419

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2023 US 202318492201**

(71) Applicant: **RTX Corporation
Farmington, CT 06032 (US)**

(72) Inventors:
- **CHEN, Lei
 Farmington, 06032 (US)**
- **KOCH, Robert
 Farmington, 06032 (US)**
- **FURRER, David U.
 Farmington, 06032 (US)**

(74) Representative: **Dehns
10 Old Bailey
London EC4M 7NG (GB)**

(54) **LARGE SCALE REGISTERED DATA GENERATION AND ANALYTICS METHOD TO ENABLE MODELING AND PREDICTION OF CORROSION**

(57) A method for non-destructive testing and measurement of corrosion attacks includes defining characteristic corrosion attack parameters, exposing a first specimen (102) to corrosive conditions to induce multiple corrosion attack sites, measuring the time of exposure to corrosive conditions, measuring one or more spatially resolved corrosion attack characteristic parameters for the multiple corrosion attack sites to provide a first corrosion data set. The first set of spatially resolved corrosion attack characteristic parameters are measured by a non-destructive technique and the probability of failure for the first specimen (102) from the first corrosion data set is modeled. The composition of the specimen (102) may be changed based on results achieved.

FIG. 1

## Description

BACKGROUND

The subject matter disclosed herein generally relates to corrosion modeling for metallic materials.

Corrosion is a complicated phenomenon that affects nearly every metallic material and engineered component. Corrosion of some commonly used materials, such as aluminum, nickel alloys and steel can be severely affected by environmental conditions, resulting in damage accumulation and subsequent compromised performance and durability. Localized attacks in the form of pitting, crevice corrosion, inter-granular attacks, and so forth are often unpredictable and detrimental to component reliability. The nucleation, growth, and/or re-passivation of this localized corrosion is stochastic due to the many variables involved in environmental conditions and the manufacturing processes and surface treatments of the components. Hence, it is desirable to model damage progression arising from localized corrosion in terms of an ensemble of localized corrosion events over a specific period of time as opposed to tracking individual attacks deterministically. The ability to model and predict corrosion behavior remains challenging due to the seemingly random nature of its onset and environment dependent progression. Current methods to study and analyze localized corrosion are often limited to destructive measurement of the samples or parts from field or lab exposure. The destructive testing and analysis results in limited data points that may not be representative of the corrosion kinetics.

A need remains for a non-destructive testing and measurement method for localized corrosion formation.

SUMMARY

According to an aspect of the present invention, there is provided a method for non-destructive testing and measurement of corrosion attacks comprises defining characteristic corrosion attack parameters. The first specimen is exposed to corrosive conditions to induce multiple corrosion attack sites. The time of exposure to corrosive conditions is measured. One or more spatially resolved corrosion attack characteristic parameters for the multiple corrosion attack sites is measured to provide a first corrosion data set. A first set of spatially resolved corrosion attack characteristic parameters are measured by a non-destructive technique. The probability of failure for the first specimen from the first corrosion data set is measured. The composition of the specimen may be changed based on results achieved.

In an embodiment of the above, the first specimen is re-exposed to the same or different corrosive conditions to induce further corrosion growth. After re-exposing the first specimen to the same or different corrosive conditions to induce further corrosion growth, the time of exposure to the same or different corrosive conditions is measured. A second set of spatially resolved corrosion attack characteristic parameters for the corrosion attack sites is measured. The probability of failure is modelled from a second corrosion data set for the re-exposure.

In a further embodiment of any of the above, the first specimen is re-exposed to the same or different corrosive conditions for n iterations and generating n corrosion data sets for n sets of spatially resolved corrosion attack characteristic parameters, where n is an integer.

In a further embodiment of any of the above, the first specimen is re-exposed for n iterations to reach a stage that can eventually lead to failure.

In a further embodiment of any of the above, the method further comprises determining the stage where likelihood of corrosion driven failure increases substantially and exposing the first specimen to corrosive conditions to induce multiple corrosion attack sites and reach a stage that can lead to failure.

In a further embodiment of any of the above, the method further comprises determining corrosion driven failure modes and rate behavior; wherein the corrosion driven failure modes and the rate behavior are determined before defining the corrosion attack characteristic parameters.

In a further embodiment of any of the above, the method further comprises calibrating the method by exposing a second specimen to the same or different corrosive conditions to induce multiple corrosion attack sites. The time of exposure to the same or different corrosive conditions is measured and a second set of spatially resolved corrosion attack characteristic parameters is measured for the corrosion attack sites to provide a second corrosion data set. A probability of failure is modelled from the second corrosion data set.

In a further embodiment of any of the above, the method further comprises comparing the modeled probability of failure from a subset of the second corrosion data set for the second specimen and the modeled probability of failure from a subset of the first corrosion data set for the first specimen.

In a further embodiment of any of the above, the specimen is a metallic material.

In a further embodiment of any of the above, a difference between the first specimen and the second specimen is a type of metal alloy, a type of metal grade, or a combination thereof.

In a further embodiment of any of the above, the corrosive conditions to induce multiple corrosion attack sites for the second specimen are different from the corrosive conditions used for the first specimen.

In a further embodiment of any of the above, the different corrosive conditions include a difference in acid concentration, a difference in humidity, a difference in acid type, a difference in temperature, a difference in electrolyte concentration, a difference in electrolyte chemistry, a difference in time, or a combination thereof.

In a further embodiment of any of the above, a subset of the corrosion data corresponding to a subset of the corrosion attack sites is selected, wherein the modeling of the probability of failure is modeled from the selected subset of the corrosion data.

In a further embodiment of any of the above, the spatially resolved characteristic corrosion attack parameters are measured by micro-computed tomography or radiography.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:

FIG. 1 is a block diagram of an embodiment of a non-destructive testing and measurement assembly;

FIG. 2 illustrates a flow diagram illustrating a method of non-destructive testing and measurement for localized corrosion formation according to a non-limiting embodiment of the present disclosure; and

FIG. 3 is a graph illustrating corrosion rate and probability of failure versus time.

DETAILED DESCRIPTION

Disclosed herein is a non-destructive testing and measurement assembly and a corrosion modeling method for non-destructive testing and measurement of corrosion attacks. The method can be used to establish time serial data for predicting corrosion rates and associated likelihood of component failure. The method is particularly suited to test aggressive corrosion attacks related to component reliability. Unlike destructive testing methods, the method enables measurement of localized corrosion formation and growth where the same corrosion attack sites can be measured multiple times after exposure and re-exposure of a specimen to corrosive conditions. Accordingly, the method provides a non-destructive, high fidelity, large quantity dataset of corrosion attack sites that can be used in corrosion nucleation and growth modeling.

Potential applications of the assembly and method include corrosion prognostics of metallic components. The method is capable of rapidly generating large datasets to enable mechanistic, statistical, and/or machine-learning models to predict the formation and growth of localized corrosion.

"Non-destructive testing" and a "non-destructive technique," as used herein, refer to non-damaging processes, where the same surface and surface features can be examined and re-examined over extended periods of time.

The assembly includes elements to provide the capability for testing and measuring the localized corrosion sites of a specimen. The assembly is adaptable to a wide variety of parts and components and can be used to measure localized corrosion sites for a small subset area of a specimen or for an entire specimen.

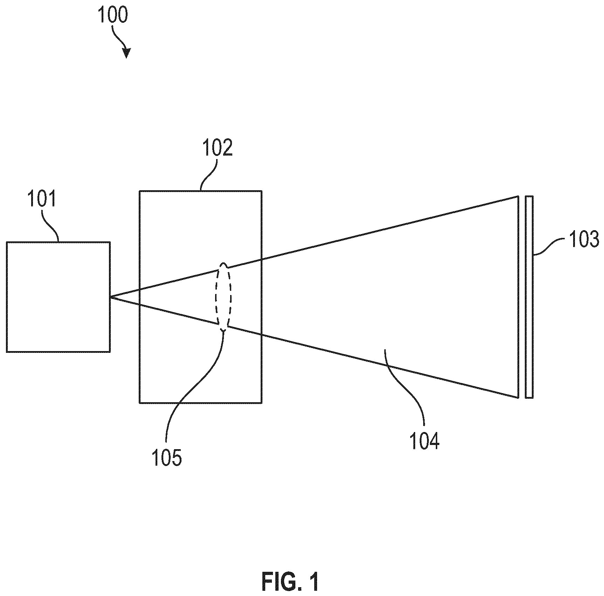

Referring to FIG. 1, a block diagram of an embodiment of the non-destructive testing and measurement assembly 100 (hereinafter assembly 100) is shown. The assembly includes an x-ray source 101, an x-ray detector 103 wherein the x-ray source 101 is configured to emit an x-ray beam 104 towards the x-ray detector 103 as shown. The assembly further includes orienting a specimen 102 within the x-ray beam 104 in order to scan an area of interest 105 on the specimen 102.

The disclosed method quantifies probabilistic risk of failures stemming from localized corrosion attacks due to material properties and non-mechanical environmental conditions. Specifically, the method applies to the corrosion that directly causes component or system failures or that becomes direct precursors of subsequent failure such as structure fractures. The method does not apply to stress corrosion crack failure where stress accelerates corrosion that cannot be reliably modeled based on an ensemble of prior corrosion attacks alone. The method includes determining the corrosion evolution behavior in either the real deployment environment or simulated environment to identify a stage of corrosion that determines specimen or component failure. Statistical corrosion rates are determined by acquiring time-evolved corrosion measurement using the non-destructive methods described herein. In some embodiments, the time-evolved corrosion measurements are acquired until a specimen reaches a stage that may lead to failure.

The disclosed method can include utilizing the assembly 100 to test and measure localized corrosion sites on a specimen 102. The method can include exposing a specimen to corrosive conditions. Exposure to corrosive conditions induces multiple corrosion attack sites on the specimen. After completion of the exposure of the specimen, the time of exposure is measured and the parameters of the corrosion attack sites on the specimen are spatially resolved with a non-destructive technique to provide corrosion data. In some embodiments, a subset of the corrosion data is selected for failure modeling. After measurement of the parameters of the corrosion attack sites, the specimen is then re-exposed to the corrosive conditions. Following, re-exposure to the corrosive conditions, the time and the parameters of the corrosion attack sites on the specimen are again spatially resolved. The specimen is re-exposed to the corrosive conditions and non-destructively tested two or more times. After collection of the desired corrosion data from the corrosion attack sites on the specimen, modeling of the probability of failure is performed using the corrosion data or a subset of the corrosion data. In some embodiments, corrosion driven failure modes and rate behavior are determined before exposing the specimen to corrosive conditions.

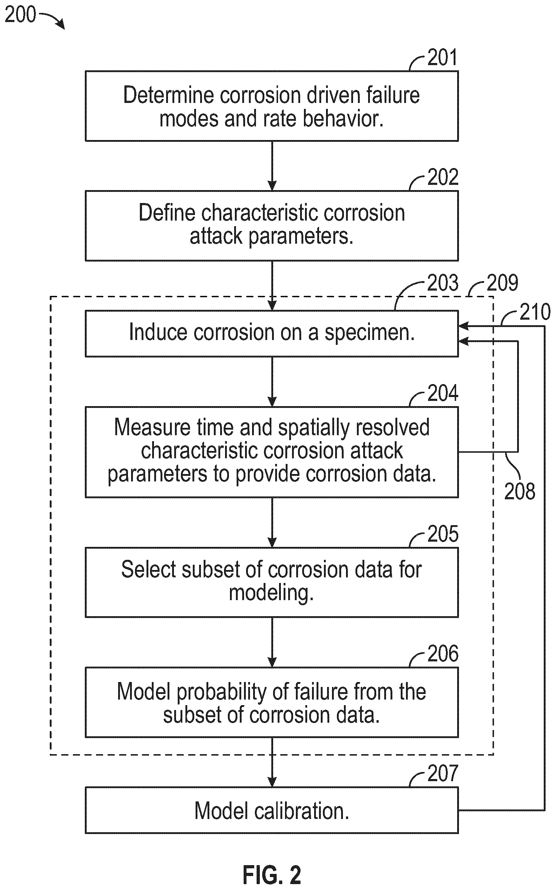

Referring to FIG. 2, a flow diagram of an embodiment of the method 200 is provided. The method 200 can be initiated with step 201, determining corrosion driven failure modes and rate behavior. Next, the characteristic corrosion attack parameters are defined in step 202, from which key statistical parameters are derived. A specimen is exposed to corrosive conditions to induce corrosion on the specimen (step 203). The time of exposure to the corrosive conditions and the measurement of the spatially resolved characteristic corrosion attack parameters (used interchangeably hereinafter with "spatially resolved parameters") are collected to provide corrosion data (step 204). Following measurement of the spatially resolved parameters, the specimen is re-exposed to corrosive conditions to induce further corrosion on the specimen (step 208) and step 203 and step 204 are repeated. In some embodiments, the specimen is re-exposed to corrosive conditions 1, 2, 3, 4, 5, up to n times to provide corrosion data representative of corrosion progression, where n is an integer. In further embodiments, the specimen is re-exposed for n iterations to reach a stage that may lead to failure. In some embodiments, a subset of the corrosion data can be selected for the modeling. The modeling is used to predict the probability of failure based on the subset of the corrosion data. The model of the method can be calibrated (step 207) by changing the corrosive conditions or the specimen properties and the method steps 209 (inclusive of steps 203 to 206) can be repeated (step 210) to assess different conditions of corrosion attacks and provide a new set of corrosion data for modeling. After model calibration, key statistical parameters are estimated based on environment corrosivity to predict the probability of failure of the components with the similar material and processing conditions. Formulae for corrosion and relationships between corrosion parameters can be found in a standard textbook. Known relationships between corrosion parameters can vary based on the corrosion attack mechanisms (e.g., crevice corrosion, pitting corrosion, galvanic corrosion, and so forth). General formulae and relationships between corrosion parameters can be used to the select and assess the appropriate parameters for subsequent modeling. As an example, probability of corrosion failure, or the inverse metrics reliability, can be described using a general 2-parameter Weibull distribution:

$$f(T) = \frac{\beta}{\eta} \left(\frac{t}{\eta}\right)^{\beta-1} e^{-\left(\frac{t}{\eta}\right)^{\beta}}$$

where $\beta$ is the shape parameter and $\eta$ is the scale parameter. These two parameters are determined using the measurement method described in this disclosure on laboratory or field exposure specimens. The values of $\beta$ and $\eta$ follow their own distributions, which are used to predict the probability of failure in an un-tested environment or for an extended time, or both.

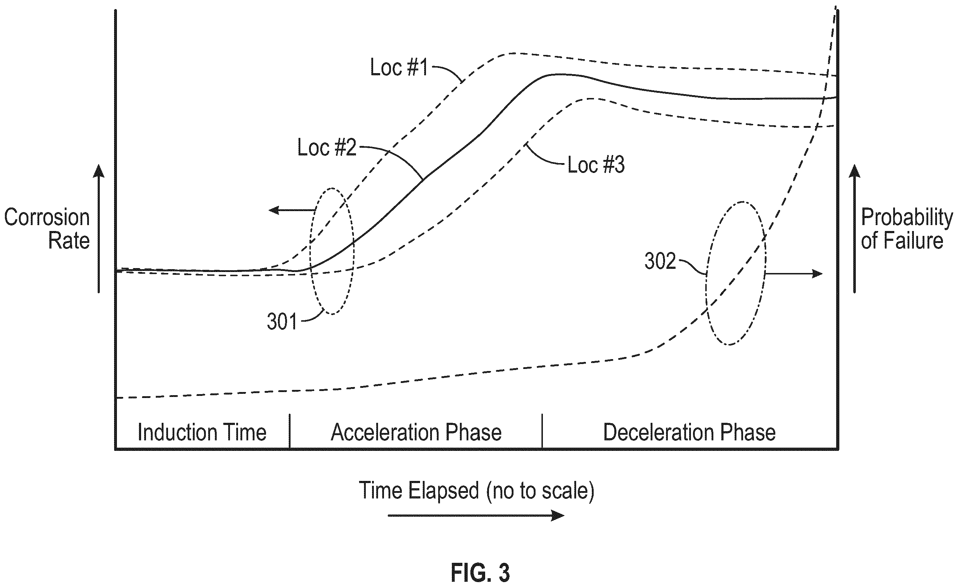

Corrosion driven failure modes include general corrosion, pitting, crevice corrosion, stress corrosion cracking, corrosion fatigue, fretting, erosion corrosion, inter-granular corrosion, or a combination thereof. Rate behavior includes the induction, acceleration, and deceleration sequence of corrosion as shown in FIG. 3. FIG. 3 provides a graph for illustrative purposes only of the evolution of rates of individual localized corrosion for three locations (Loc #1, Loc #2, and Loc #3). Because the localized corrosion attacks are stochastic in nature, an ensemble of corrosion damages are preferable for use to model corrosion behavior for prediction purposes. Corrosion begins to accelerate after the end of an induction time period at the acceleration phase, (labeled area 301 of the graph). As time elapses, the corrosion rate increases until a peak rate associated with the deceleration phase of corrosion. During the deceleration phase of corrosion, the probability of failure increases (labeled area 302 of the graph).

Defining characteristic corrosion attack parameters (FIG. 2, step 202) can include the directional depth of a corrosion attack, depth to a normal plane of interest, and volume of the corroded area. The specimen can be scanned by a non-destructive technique prior to step 203 in order to provide the initial normal plan of interest, surface variation, and so forth of the specimen in the absence of any induced corrosion attack sites.

During step 203, corrosion is induced on a specimen by exposing the specimen to corrosive conditions. The exposure to the corrosive conditions induces multiple corrosion attack sites. The conditions of the corrosive conditions can vary. In an embodiment, the corrosive conditions are tailored to replicate anticipated real-world conditions for a part or a component. In another embodiment, the corrosive conditions are the real-world use for a part or a component. The corrosive conditions can be static or varied. Examples of corrosive conditions properties include acidity, humidity, acid type, temperature, electrolyte concentration, electrolyte chemistry (e.g., salt type, mixtures), and combinations thereof. In some embodiments, the corrosive conditions can be different for a first specimen and a second specimen. Examples of different corrosive conditions include a difference in acid concentration, a difference in humidity, a difference in acid type, a difference in temperature, a difference in electrolyte concentration, a difference in electrolyte chemistry, and so forth.

Subsequent measurement of corrosion attacks can be performed during a stage where the likelihood of corrosion driven failures increases substantially, i.e., the labeled area 302 in FIG. 3. In some embodiments, the method includes determining a stage where likelihood of corrosion driven failure increases substantially and exposing a specimen to corrosive conditions to induce multiple corrosion attack sites and reach the stage that may lead to failure. After exposure of the specimen to corrosive conditions, a non-destructive technique can be used to measure the spatially resolved parameters (step 204) as defined in step 202. The non-destructive technique enables a more accurate and effective corrosion modeling method than destructive techniques for corrosion measurement. To improve the efficiency of data collection, a specimen can be divided in different zones, where only the most aggressive attacks that are used for determining component reliability in each zone are tracked for time resolved evolution. For example, destructive techniques can entail exposing the part or material to corrosive conditions and then evaluating the occurrence corrosion attacks via sample cross-sectioning and/or sample polishing and metallographic review. These destructive evaluations impede the study of corrosion growth and utilize an excess samples in comparison to the non-destructive technique described herein. In addition, the non-destructive technique permits rapid compilation of large datasets and is more efficient because it does not use the costly and time-consuming sample preparation and sampling of destructive techniques.

In some embodiments, after the spatially resolved parameters are measured on a corroded specimen, the corroded specimen can be re-exposed to the corrosive conditions to continue the corrosion growth to provide a "re-exposed, corroded specimen." Subsequently, the spatially resolved parameters for the re-exposed, corroded specimen can be measured and compared to the initial corrosion data set. The re-exposure of the specimen to corrosive conditions can be repeated (step 108) multiple times as desired to provide a more accurate reflection of the progression of corrosion for the specimen.

One method of non-destructively examining and re-examining the specimen is conducted via computer aided tomography (hereinafter computer tomography or CT). The term "computed tomography," or CT, refers to a computerized x-ray imaging procedure where a collection of angle-resolved x-ray radiographic projections of a specimen and subsequent computer-based transformation/back-projection of the lower dimensional x-ray radiographic projections to higher dimensions. In some embodiments, during a CT scan the narrow beam of x-rays is aimed at the specimen and is rotated around the specimen, producing signals that are processed by the machine's computer to generate cross-sectional images, or "slices." In other embodiments, the specimen can be rotated while the x-ray source is held stationary to generate the cross-sectional images. These slices are called tomographic images and can provide more detailed information than conventional x-rays. Depending on the x-ray detector used, the x-ray radiographic projections can be one-dimensional or two-dimensional signals, and the back-projection transforms the x-ray radiographic projections to two-dimensional slices or three-dimensional slices, respectively. Once a number of successive slices are collected by the machine's computer, they can be digitally "stacked" together to form a three-dimensional (3D) image of the specimen that allows for easier identification of basic structures as well as internal features of the specimen.

Unlike a conventional x-ray-which uses a fixed x-ray tube-a CT scanner (not shown here) can use a motorized x-ray source that rotates around a specimen or can use a static x-ray source while the specimen is rotated. During a CT scan, the specimen is orientated respective to the CT scanner and the CT scanner and/or the specimen moves while the x-ray tube shoots narrow beams of x-rays through the bulk of the specimen. Instead of film, CT scanners use special digital x-ray detectors, which are located directly opposite the x-ray source. As the x-rays leave the specimen, they are picked up by the detectors and transmitted to a computer.

Each time the x-ray source completes a specimen rotation, the CT computer uses sophisticated mathematical techniques to construct a two-dimensional or three-dimensional image slice of the specimen. The thickness of the specimen represented in each image slice can vary depending on the CT machine used, but usually ranges from 1-10 millimeters. When a full slice is completed, the image is stored. In some embodiments, the x-ray scanning process is repeated to produce another image slice. This process continues until the desired number of slices is collected.

Image slices can be displayed individually in two or three dimensions. In some embodiments, multiple can be stacked together by the computer to generate a 3D image of the specimen that shows the microstructure of the specimen as well as any abnormalities (such as pits, nucleation sites, or the like, that the technician is trying to identify. This method has many advantages including the ability to rotate the 3D image in space or to view slices in succession, making it easier to find the exact place where a problem may be located.

For example, a CT scanner can be a two-dimensional image scanner and the specimen can be rotated a single time as the CT scanner shoots x-rays through the specimen. The data collected by the x-ray detector can undergo a computer-based transformation to provide a three-dimensional image slice-stack of the specimen. The three-dimensional image slice-stack can then be analyzed for spatially resolved parameters and to select a subset of corrosion data for modeling. Then the probability of failure can be modeled from the subset of corrosion data.

After compilation of the corrosion data from measurement of the spatially resolved parameters, the population of corrosion attack sites can be analyzed to generate the distribution of key parameters (e.g., the shape and scale parameters in Weibull analysis). The parameters, along with newly acquired corrosion attacks, can then be used to estimate the cumulative distribution function.

Accurate kinetics of individual corrosion attacks are influenced by many factors such as manufacturing history, defects, environmental variability, and the like. Therefore, examining a population of corrosion attacks, specifically a sub-population of all attacks, facilitates estimation of the corrosion rate. With the selected subset of corrosion data (step 205), models can be used to relate corrosion nucleation rate, corrosion pit depth growth rate and other corrosion attack parameters as a function of the base alloy of the specimen, the electrolyte chemistry of the corrosive conditions, temperature, and time of exposure. The models can be further applied to predict corrosion rates for engineering components to improve component life prediction for a given application environment. The models used to analyze the probability of failure based on the corrosion data can include statistical, regression, data-driven empirical or machine learning models, physics-based mechanistic models, and combinations thereof. For example, analytical equation models can be established to link known physics-based mechanisms with the high fidelity datasets from the established corrosion analysis method.

In an embodiment, the method 200 may be performed on a first specimen, repeating the steps of exposing the first specimen to corrosive conditions (203) and measurement (204) in repeated iterations. After the collection of the dataset, the data may undergo further analysis to select a subset of the data for modeling and performing the modeling to provide a probability of failure for a part or a component based on the subset of the corrosion data. In some embodiments, the method 200 can further comprise testing of a second specimen under the same or different corrosive conditions to provide another dataset. In another embodiment, the method 200 can further comprise testing of a second specimen, with a different specimen material type than the specimen material type as the first specimen, to provide another dataset. The dataset for the first specimen and the dataset for the second specimen can be compared to relate corrosion parameters and parameters of the corrosive conditions and/or parameters of the specimen material type. In other embodiments, datasets may be collected on multiple specimens under varied corrosive conditions or specimen material types.

In an embodiment, a single specimen (a first specimen) may be subjected to a first set of corrosive conditions and then examined and re-examined over uniform or non-uniform intervals of time (using the same first set of corrosive conditions) using one or more non-destructive tests to determine the progressive effects of corrosion. After each examination, the specimen is re-exposed to the same first set of corrosive conditions. The first set of corrosive conditions involve the use of defined characteristic corrosion attack parameters that the specimen may be exposed to during its life cycle. The exposure to the first set of corrosive conditions generally induces multiple corrosion attack sites. The time of exposure to the first set of corrosive conditions is measured.

In an embodiment, one or more spatially resolved corrosion attack characteristic parameters for the multiple corrosion attack sites is measured to provide a first corrosion data set. The measurement typically is conducted via one or more non-destructive techniques. The probability of failure is generally modeled from the first corrosion data set to provide a first model. In an embodiment, a subset of the corrosion data that corresponds to a subset of the corrosion attack sites is selected, examined and used for modeling. Models of the probability of failure may be generated from the selected subset of the first corrosion data set. Data subsets from any of the exposures of any of the specimens may thus be used to generate probability models for failure or correct existing models.

Multiple measurements such as, for example, a second measurement, a third measurement, and so on, up to "n" measurements may be made on the first specimen, resulting in the collection of second, third, and so on, up to "n" data sets. For each exposure, a set of spatially resolved corrosion attack characteristic parameters is measured. For example, a first exposure to a first set of corrosive conditions results in a first set of spatially resolved corrosion attack characteristic parameters being measured to generate a first corrosion data set, while a second exposure (at a later time) of the same specimen to the same first set of corrosive conditions results in a second set of spatially resolved corrosion attack characteristic parameters being measured to generate a second corrosion data set. The model arrived from the first corrosion data set may be tested against the results obtained for each subsequent measurement. The model may be corrected based on the collected "n" corrosion data sets obtained from the "n" different measurements on a single specimen under the same environmental conditions, thus providing for a statistical data-driven and data-tested, accurate predictive model. The number "n" above in each instance is an integer. For example, n can be 1, 2, 3, 4, and so on. In an embodiment, n can be greater than or equal to 10, greater than or equal to 20, greater than or equal to 30, greater than or equal to 100, and so on.

In another embodiment, more than one specimen (e.g., a second specimen, a third specimen, and so on, up to "n" specimens) of the same material composition may be tested under "m" different conditions. For example, n and m can independently be 1, 2, 3, 4, and so on. N and m may be the same or different from one another. In an embodiment, n and m can independently be any integer up to 10, any integer up to 20, any integer up to 30, any integer up to 100, and so on. For example, a second specimen may be tested under the same conditions as the first specimen or may be tested under a second set of conditions. Models may be generated for each set of conditions. For example, when "n" different specimens each having the same composition are tested under the same conditions as those to which the first specimen is exposed to, the respective models generated may be correlated with the first model (detailed above). Alternatively, the first model may be corrected using the data generated from the "n" different specimens.

In another embodiment, when "n" different specimens are exposed to "m" different sets of corrosive conditions, a plurality of different models may be obtained for each of the different specimens under each of the different conditions. These different models may be aggregated to provide an "envelope" model that provides predictive capabilities for the life cycle of each different specimen under different conditions. Mathematical algorithms derived from the model may provide predictive information as to how certain specimen compositions would behave under certain environmental conditions. The composition of the specimen may be varied based on the results obtained. Alternatively, different materials may be selected for use in different conditions based on the predictions of the model.

The models may provide predictive capabilities for generating "new" specimens with different compositions. In other words, the composition of an article may be changed to combat certain harsh environmental conditions based on the predictive capabilities of the model. Alternatively, new surface coatings such as thermal barrier coatings may be designed or used to cover specimen surfaces that are aggressively attacked under certain environmental conditions. The model can also provide information pertaining to changing the corrosive conditions to mitigate the effects of long term corrosion. The described corrosion modeling method provides a non-destructive testing and measurement process to evaluate corrosion attacks. In comparison to destructive testing methods, the non-destructive corrosion modeling method is a more time- and cost-effective process that provides improved modeling accuracy. The method can provide large, accurate datasets, which are material, geometry, and environment specific. Data collected is both time and spatially resolved. The models provide increased accuracy and predictability of the life of engineered components subjected to corrosive conditions of use.

As used herein, the terms "about" and "substantially" are intended to include the degree of error associated with measurement of the particulate quantity based upon the equipment available at the time of filing the application. For example, the terms may include a range of ± 8%, or 5%, or 2% of a given value or other percentage change as will be appreciated by those of skill in the art for the particulate measurement and/or dimensions referred to herein.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description but is only limited by the scope of the appended claims.

**Claims**

1. A method for non-destructive testing and measurement of corrosion attacks comprising:

   defining characteristic corrosion attack parameters;
   exposing a first specimen (102) to corrosive conditions to induce multiple corrosion attack sites;
   measuring a time of exposure to corrosive conditions;
   measuring one or more spatially resolved corrosion attack characteristic parameters for the multiple corrosion attack sites to provide a first corrosion data set, wherein a first set of spatially resolved corrosion attack characteristic parameters are measured by a non-destructive technique; and
   modeling a probability of failure from the first corrosion data set; and
   changing the composition of the first specimen (102) based on results achieved.

2. The method of claim 1, wherein the first specimen (102) is re-exposed to the same or different corrosive conditions to induce further corrosion growth, wherein after re-exposing the first specimen (102) to the same or different corrosive conditions to induce further corrosion growth, measuring the time of exposure to the same or different corrosive conditions, measuring a second set of spatially resolved corrosion attack characteristic parameters for the corrosion attack sites, and further modeling the probability of failure from a second corrosion data set for the re-exposure.

3. The method of claim 2, wherein the first specimen (102) is re-exposed to the same or different corrosive conditions for n iterations, and generating n corrosion data sets for n sets of spatially resolved corrosion attack characteristic parameters, where n is an integer.

4. The method of claim 3, wherein, the first specimen (102) is re-exposed for n iterations to reach a stage that leads to failure.

5. The method of any preceding claim, further comprising determining the stage where likelihood of corrosion driven failure increases substantially and exposing the first specimen (102) to corrosive conditions to induce multiple corrosion attack sites to reach a stage that leads to failure.

6. The method of any preceding claim, wherein the method further comprises, determining corrosion driven failure modes and rate behavior, wherein the corrosion driven failure modes and the rate behavior are determined before defining the corrosion attack characteristic parameters.

7. The method of any preceding claim, wherein the method further comprises:

   calibrating the method by exposing a second specimen to the same or different corrosive conditions to induce multiple corrosion attack sites;
   measuring the time of exposure to the same or different corrosive conditions and measuring a second set of spatially resolved corrosion attack characteristic parameters for the corrosion attack sites to provide a second corrosion data set; and
   modeling the probability of failure from the second corrosion data set.

8. The method of claim 7, wherein the method further comprises comparing the modeled probability of failure from a subset of the second corrosion data set for the second specimen and the modeled probability of failure from a subset of the first corrosion data set for the first specimen (102).

9. The method of claim 7 or 8, wherein a difference between the first specimen (102) and the second specimen is a type of metal alloy, a type of metal grade, or a combination thereof.

10. The method of any of claims 7 to 9, wherein the corrosive conditions to induce multiple corrosion attack sites for the second specimen are different from the corrosive conditions used for the first specimen (102).

11. The method of claim 10, wherein the different corrosive conditions include a difference in acid concentration, a difference in humidity, a difference in acid type, a difference in temperature, a difference in electrolyte concentration, a difference in electrolyte chemistry, a difference in time, or a combination thereof.

12. The method of any preceding claim, wherein the first specimen (102) is a metallic material.

13. The method of any preceding claim, further comprising selecting a subset of the corrosion data corresponding to a subset of the corrosion attack sites, wherein the modeling of the probability of failure is modeled from the selected subset of the corrosion data.

14. The method of any preceding claim, wherein the spatially resolved characteristic corrosion attack parameters are measured by micro-computed tomography or radiography.

**FIG. 1**

200

┌─────────────────────────────────┐ 201
│ Determine corrosion driven failure │
│ modes and rate behavior. │
└─────────────────────────────────┘
            │
            ▼
┌─────────────────────────────────┐ 202
│ Define characteristic corrosion │
│ attack parameters. │
└─────────────────────────────────┘
            │
            ▼
┌─────────────────────────────────┐ 203  209  210
│ Induce corrosion on a specimen. │◄───────
└─────────────────────────────────┘◄──────
            │                          │
            ▼                          │ 208
┌─────────────────────────────────┐ 204
│ Measure time and spatially resolved │
│ characteristic corrosion attack │
│ parameters to provide corrosion data. │
└─────────────────────────────────┘
            │
            ▼
┌─────────────────────────────────┐ 205
│ Select subset of corrosion data for │
│ modeling. │
└─────────────────────────────────┘
            │
            ▼
┌─────────────────────────────────┐ 206
│ Model probability of failure from the │
│ subset of corrosion data. │
└─────────────────────────────────┘
            │
            ▼
┌─────────────────────────────────┐ 207
│ Model calibration. │
└─────────────────────────────────┘

**FIG. 2**

FIG. 3

Europäisches
Patentamt

European
Patent Office

Office européen
des brevets

# EUROPEAN SEARCH REPORT

Application Number

EP 24 20 8362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/178308 A1 (SUBRAMANIYAN ARUN KARTHI [US] ET AL) 22 June 2017 (2017-06-22) * paragraph [0002] * * paragraph [0021] * * paragraph [0048] - paragraph [0056]; figures * | 1-14 | INV. G01N17/00 |
| A | DU PLESSIS ANTON ET AL: "A review of X-ray computed tomography of concrete and asphalt construction materials", CONSTRUCTION AND BUILDING MATERIALS, vol. 199, 19 December 2018 (2018-12-19), pages 637-651, XP085585499, ISSN: 0950-0618, DOI: 10.1016/J.CONBUILDMAT.2018.12.049 * page 638, paragraph 1.1 * * page 644, paragraph 3.5 - page 647, paragraph 3.6.1 * * figures * | 1-14 | |
| A | SINGARAVELU ARUN SUNDAR SUNDARAM ET AL: "3D Time-Resolved Observations of Fatigue Crack Initiation and Growth from Corrosion Pits in Al 7XXX Alloys UsingSynchrotron X-ray Tomography", METALLURGICAL AND MATERIALS TRANSACTIONS A, SPRINGER US, NEW YORK, vol. 51, no. 1, 4 November 2019 (2019-11-04), pages 28-41, XP036975635, ISSN: 1073-5623, DOI: 10.1007/S11661-019-05519-Z [retrieved on 2019-11-04] * the whole document * | 1-14 | TECHNICAL FIELDS SEARCHED (IPC) G01N |

The present search report has been drawn up for all claims

| Place of search | Date of completion of the search | Examiner |
|---|---|---|
| The Hague | 13 March 2025 | Savage, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8362

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | Publication date | Patent family member(s) | Publication date |
|---|---|---|---|
| US 2017178308 A1 | 22-06-2017 | NONE | |